# EUROPEAN PATENT SPECIFICATION

(11) **EP 2 901 442 B1**
(45) Date of publication and mention of the grant of the patent: **21.12.2022**
(21) Application number: 13841446.1
(22) Date of filing: 23.09.2013
(51) Int. Cl.: G05B 19/042, H05B 47/155, H05B 47/175, H05B 47/19

(54) **CONTROL DEVICE AND SYSTEM CONTAINING THE CONTROL DEVICE**
STEUERUNGSVORRICHTUNG UND SYSTEM MIT DER STEUERUNGSVORRICHTUNG
DISPOSITIF DE CONTRÔLE ET SYSTÈME CONTENANT LE DISPOSITIF DE CONTRÔLE

(30) Priority: 28.09.2012 US 201261707761 P; 21.08.2013 US 201313972675
(43) Date of publication of application: 05.08.2015
(73) Proprietor: Production Resource Group, L.L.C., Armonk, NY 10504 (US)
(72) Inventor: BLAIR, Scott, Glendale, California 91201 (US); HOCHMAN, Jeremy, Glendale, California 91201 (US)
(74) Representative: Sawodny, Michael-Wolfgang
(86) International application number: PCT/US2013/061232
(87) International publication number: WO 2014/052245

(56) References cited:
- WO-A1-2007/128317
- WO-A1-2007/128317
- WO-A1-2011/131198
- US-A- 5 668 537
- US-A1- 2001 000 422
- US-A1- 2002 093 296
- US-A1- 2009 096 993
- US-A1- 2009 100 452
- US-A1- 2010 107 018
- US-A1- 2010 328 465
- US-A1- 2011 031 905
- US-A1- 2012 033 414
- US-B2- 6 761 470

## Description

### CROSS-REFERENCE TO RELATED APPLICATIONS

This application claims the benefits of U.S. provisional patent application no. 61/707,761, entitled "CONTROL DEVICE, SYSTEM CONTAINING THE CONTROL DEVICE AND METHOD OF USING THE SAME" filed on September 28, 2012 and U.S. Patent Application No. 13/972,675, entitled "CONTROL DEVICE, SYSTEM CONTAINING THE CONTROL DEVICE AND METHOD OF USING THE SAME" and filed on August 21, 2013.

### Background

### 1. Field

This invention relates to the electrical arts. In particular, this invention relates to a control device for the control of at least one controllable media device, a system incorporating the control device and a method of using the control device.

### 2. Description of the Related Art

As media displays are not only becoming more elaborate and complex, but are becoming more commonplace, the control of the controllable media devices used in creating the displays must become more versatile. To this end, controllable media devices with automated and remotely controllable parameters are known in the entertainment and architectural lighting markets. Such media devices are commonly used in theaters, television studios, concerts, theme parks, night clubs and other venues. Representative controllable media devices include lighting devices, such as luminaires and dimmers, projection devices, video processors, audio devices, media servers, effects systems, such as fog machines, and the like. So, for example, a typical controllable lighting device will, at least, provide remote control over intensity, color, focus, beam pattern and zoom. Controllable lighting devices may further provide remote control over pan and tilt among other parameters. Similarly, a typical controllable projector will, at least, provide remote control over intensity, zoom, focus and input selection.

It is a difficulty in elaborate media displays, that the different controllable media devices are often controlled by different protocols. Today many controllable devices are controlled by command-based protocols, including the RS-232 protocol, a command-based protocol commonly used for projectors, video processors/switchers, and playback devices, the RS-422 protocol and, in particular, the Sony Decklink extended RS-422 protocol, commonly used to trigger playback devices, such as analog and digital VTR decks, media servers and the like, as well as certain Ethernet-based protocols.

It is also known to control certain controllable media devices through the industry standard state-based protocols, such as DMX-512, as described in US 5 668 537 A. . DMX-512 was developed by the United States Institute of Theatre Technology (USITT) in 1986 and has since been adopted and revised by the Entertainment Services and Technology Association (ESTA) as an ANSI standard, E1.11. This is an EIA RS-485 based serial network protocol designed to transmit 512 bytes of data (or channels) from a DMX-512 controller to a number of serially connected media device controllers.

A controllable media device controller that uses DMX-512 for control uses a number of discrete channels to control various media device parameters. Each controllable media device is designed by its manufacturer with a number of such controllable parameters that respond to a pre-defined mapping of the channels. Typically, the assignment mapping of DMX-512 channels to the internal control channels and hence to physical parameters is fixed within the media device. For example, channels 1 and 2 may control pan and tilt, 3 may control zoom and so on. Additionally, each of the channels has multiple levels, or amplitude settings, to produce different values for the parameters within the channels. The amplitude level on each channel can be set to one of up to 255 discrete levels. The mappings of the values within the channels to particular commands for a parameter are also fixed within the media device.

It is a drawback of such DMX-512 and other state-based protocol controllable devices, that the controller has control over all exposed parameters whether all the parameters are to be used or not. This results in the user often changing parameters that should not be modified. With a DMX-512 controllable projector, for example, the user may want control over only intensity and input selection, but not zoom or focus, so that a controller user will not inadvertently adjust parameters, that a projectionist may have spent hours manually setting.

A manufacturer may offer more than one such mapping selectable as a different "protocol mode" or "library" option. It remains a drawback, however, that the user cannot freely decide which parameters to use. It is a further drawback of this approach that the library file format is different for every brand/type of control requiring the media device controller include a large number of library files in order to support multiple media devices.

### Summary of the Invention

Now in accordance with the invention, a control device is provided as defined in claim 1. The control device comprises a housing and at least one printed circuit board disposed in the housing. According to the invention, the at least one printed circuit board, includes a central processing unit and a memory.

According to the invention, the control device is configured to control an output signal received from the state-based protocol controller, such as a DMX protocol signal. According to the invention, the output signal is composed of a plurality of channels repeatedly transmitted, at least one of the plurality of channels for controlling a parameter of at least one controllable media device and the control device configured to selectively disable and/or enable control of the parameter of the at least one of the controllable media devices by the at least one channel while the state-based protocol controller continues to transmit the at least one channel to at least one controllable media devices.

According to the invention, the control device includes a state-based protocol inlet port, such as an XLR-5 inlet port, for communication with the state-based protocol controller, such as a DMX-512 protocol controller, and a state-based protocol outlet port, such as an XLR-5 outlet port, for communication with a state-based protocol controllable media device, such as a DMX-512 protocol controllable media device. In addition, the control device includes at least one communication port for communication with a media device controllable by a protocol other than the state-based protocol. In some embodiments, the at least one additional communication port is a serial port, an Ethernet port or an MSTBA port and, in some embodiments, the protocol other than the state-based protocol is an RS232 protocol or an RS422 protocol.

In one embodiment, the control device includes a wireless Ethernet controller configured to provide control of the device via Wi-Fi or via a Local Area Network. And in some embodiments, the control device is configured to provide support for at least one of the ArtNet, PathportNe, ETCNet, MA-Net, MA-Net2, ACN, ANSI E1.31, ANSI E1.33, SLPv2 and ANSI E1.17 protocols. In another embodiment, the control device is configured with an embedded web server configured to provide control of the device via the Internet.

In some embodiments of the invention, the control device includes more than one Ethernet port. In some embodiments, the control device includes an Ethernet switch configured to control the more than one Ethernet port. And in some embodiments, the control device is configured to provide GPIO control of at least one of the state-based protocol controllable media devices and the command-based control media devices. In some embodiments, the control device includes at least one of an MSTBA or other communication port configured to support the GPIO control.

In some embodiments, the control device additionally includes a dedicated USB charging port disposed in the housing. And in some embodiments, the control device additionally includes a user interface device disposed in the housing for control of the device.

In some embodiments, the control device additionally includes a clock generator disposed in the housing. And in some embodiments, the control device supports MIDI Show Control and Midi time code extended protocols.

In accordance with the invention, there has been discovered a media device control system which in addition to the control device comprises a state-based protocol controller and at least one state-based protocol controllable media device. In some embodiments, the state-based protocol controller is a DMX-512 protocol controller. And in some embodiments, the at least one media device is a lighting device, a projection device, a video processor, an audio device, a media server or an effects system device.

In accordance with another aspect of the invention, there has been discovered a control device for a serial network protocol controller, such as a DMX-512 protocol controller, configured to transmit an output signal composed of a plurality of channels repeatedly to at least one controllable media device, at least one of the plurality of channels for controlling a parameter of one of the at least one controllable media device. In some embodiments, the parameter is intensity, contrast control, gamma correction, input source selection, horizontal panning, vertical panning, tilt control, zoom in and out, control of the beam pattern, image freezing, focus control or color control.

In one aspect, the control device comprises a housing with a CPU and a memory disposed in the housing. And in one aspect, control device includes a serial network protocol inlet port, such as an XLR-5 inlet port, for communication with the serial network protocol controller, such as a DMX-512 protocol controller, and a serial network protocol outlet port, such as an XLR-5 outlet port, for communication with the at least one serial network protocol controllable media device, such as a DMX-512 protocol controllable media device. And in one aspect, the control device is configured to selectively disable and/or enable control of the parameter of the controllable media device by the at least one channel while the serial network protocol controller continues to transmit the at least one channel to the at least on serial network protocol controllable media device.

In one embodiment, the control device further comprises a wireless Ethernet controller configured to provide control of the device via Wi-Fi or via a Local Area Network. And in one embodiment, the Ethernet controller provides support for at least one of ANSI E1.31, Artnet, PathportNet, ETCNet, MA-Net, MA-Net2 and ACN protocol. In another embodiment, the control device further comprises an embedded web server configured to provide control of the device via the Internet.

In an aspect of the invention, the control device further comprises at least one additional communication port for communication with a legacy media device controllable by a protocol other than the serial network protocol. In some embodiments, the at least one additional communication port is a serial port, and Ethernet port or an MSTBA port and in some embodiments, the protocol other than the serial network protocol is an RS232 or an RS422 protocol.

In accordance with one aspect of the invention, there has been discovered a media device control system which in addition to the control device comprises a serial network protocol controller and at least one serial network protocol controllable media device. In some embodiments, the serial network protocol controller is a DMX-512 protocol controller. And in some embodiments, the at least one media device is a lighting device, a projection device, a video processor, an audio device, a media server or an effects system device.

In accordance with another aspect of the invention, a method for controlling at least one parameter of a controllable media device comprises transmitting an output signal composed of a plurality of channels repeatedly to a control device operably connected to the controllable media device, where at least one of the plurality of channels is for controlling a parameter of the controllable media device. Representative parameters include, without limitation, contrast control, gamma correction, input source selection, horizontal panning, vertical panning, tilt control, zoom in and out, control of the beam pattern, image freezing, focus control and color control.

In one aspect, control of the parameter is selectively disabled using the control device, while continuing to transmit the at least one channel. And in one aspect, the output signal composed of the plurality of channels is repeatedly transmitted by a media device controller, such as a serial network protocol controller. Suitable serial network protocol controllers include, without limitation, DMX-512 protocol controllers, ANSI E1.31 protocol controllers, Artnet protocol controllers, PathportNet protocol controllers, ETCNet protocol controllers, MA-Net controllers, MA-Net2 protocol controllers and ACN protocol controllers.

And in an aspect of the invention, the method further comprises selectively enabling control of the disabled at least one parameter of the at least one controllable media device by the at least one channel of the plurality of channels using the control device, while continuing to transmit the at least one channel. In some embodiments, the selective enabling and disabling control of the parameter of the controllable media is by a graphical interface configured to selectively disable and/or enable control of the parameter of the controllable media device by the signal controller.

### Brief Description of the Drawings

The accompanying drawings, together with the specification, illustrate exemplary embodiments, and, together with the description, serve to explain the principles of these embodiments.
FIG. 1 is a top and front isometric view of one embodiment of a control device in accordance with the invention, with the top and front of the housing shown in phantom;
FIG. 2 is a top view of the control device shown in FIG. 1, with the top of housing shown in phantom;
FIG. 3 is a front view of the control device shown in FIG. 1, with the front of housing shown in phantom;
FIG. 4 is a back view of the control device shown in FIG. 1, with the back of housing shown in phantom;
FIG. 5 is a schematic illustration of a first embodiment of a media device control system including a control device connected to a plurality of controllable media devices;
FIG. 6 is a schematic illustration of a second embodiment of a media device control system including three control devices, each control device connected to a plurality of controllable media devices; and
Figs. 7A and 7B are diagrammatic views of a user interface before and after selective disabling of a plurality of channels.

### Detailed Description of the Preferred Embodiments

Particular embodiments of the invention are described below in considerable detail for the purpose of illustrating its principles and operation. However, various modifications may be made, and the scope of the invention is not limited to the exemplary embodiments described below.

Disclosed is a media device control system comprising a state-based protocol controller, at least one device for controlling signals generated by the state-based protocol controller and a plurality of controllable media devices. In some embodiments, the media device control system additionally comprises a remote control unit. It is a distinct advantage of the invention that the control device is of use, not only with controllable media devices controlled by state-based protocols, such as the DMX-512 protocol, but by command-based protocols. For example, the control device is useful for configuration and control of RS-232 and RS-422 protocol controlled devices.

In one aspect, the control device is configured to transmit the output signal composed of a plurality of channels repeatedly based on any suitable standard state-based protocol, such as the DMX-512 protocol. Presently, a DMX-512 controller is configured to serially transmit up to 512 channels. In such aspects, at least one of the plurality of channels is for controlling a parameter of at least one DMX-512 controllable media device.

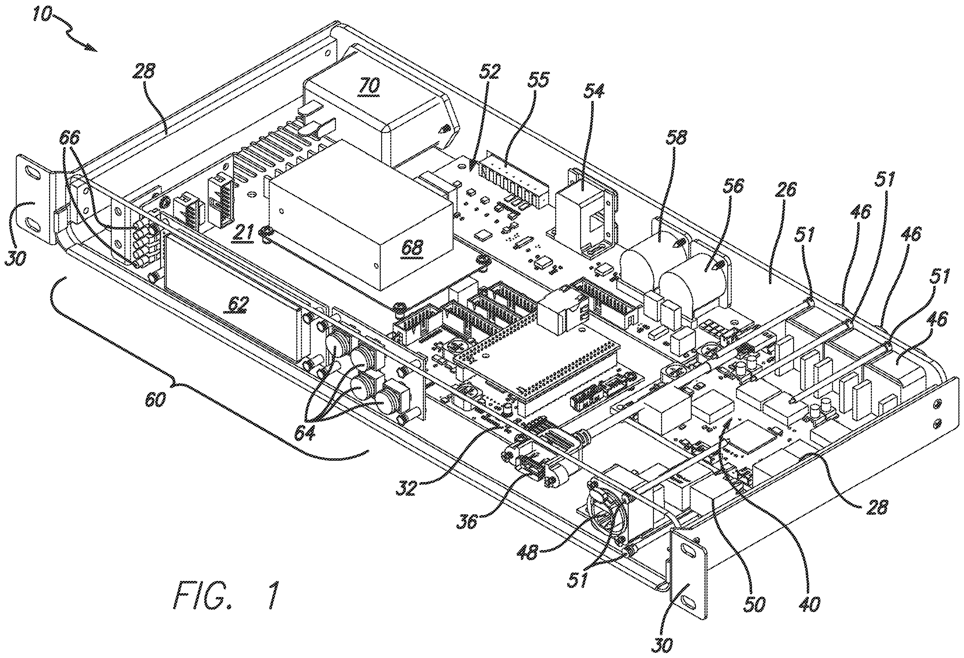

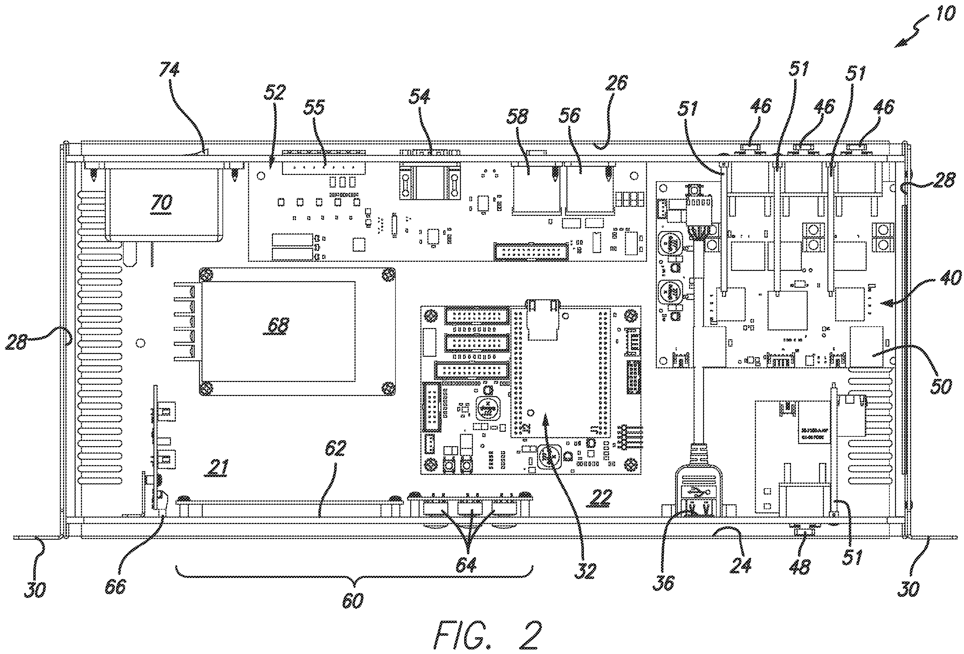

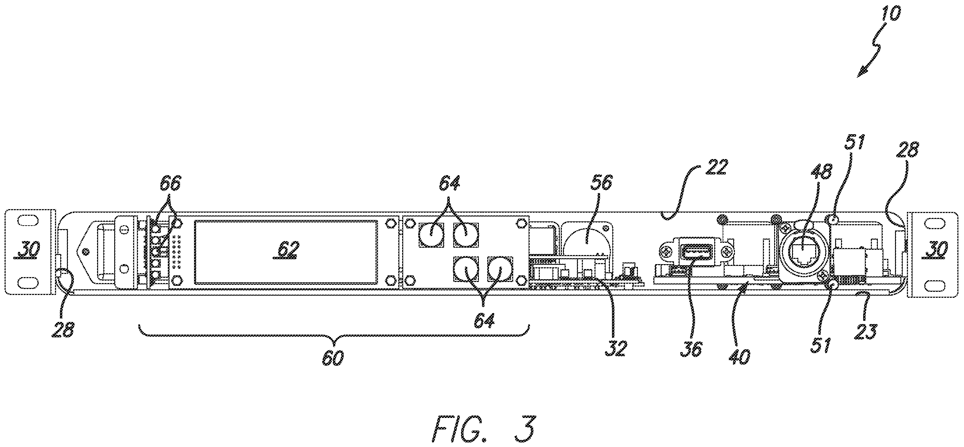

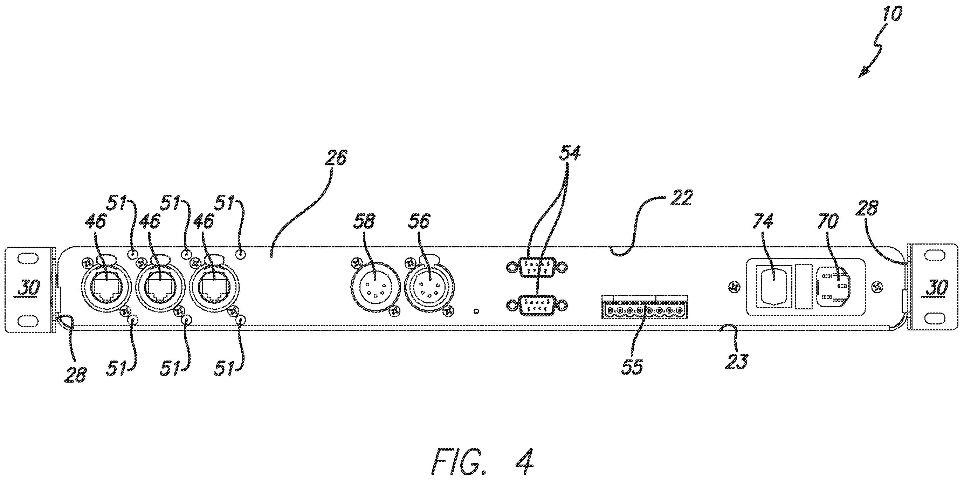

Details of the control device 10 are shown in FIGS. 1-4. The control device includes a housing 21. In the embodiment shown in FIGS. 1-4, the housing has a generally rectangular cross section with a top surface 22 (FIGS. 3 and 4), a bottom surface 23 (FIGS. 3 and 4), a front surface 24 (FIGS. 2 and 3), a back surface 26 (FIGS. 2 and 4) and opposing side surfaces 28 (FIGS. 1-4). In some aspects, the housing forms a rack mount box dimensioned to be mounted on a rack, such as a 19" rack (not shown) with screws (not shown) using flanges 30 (FIGS. 1-4).

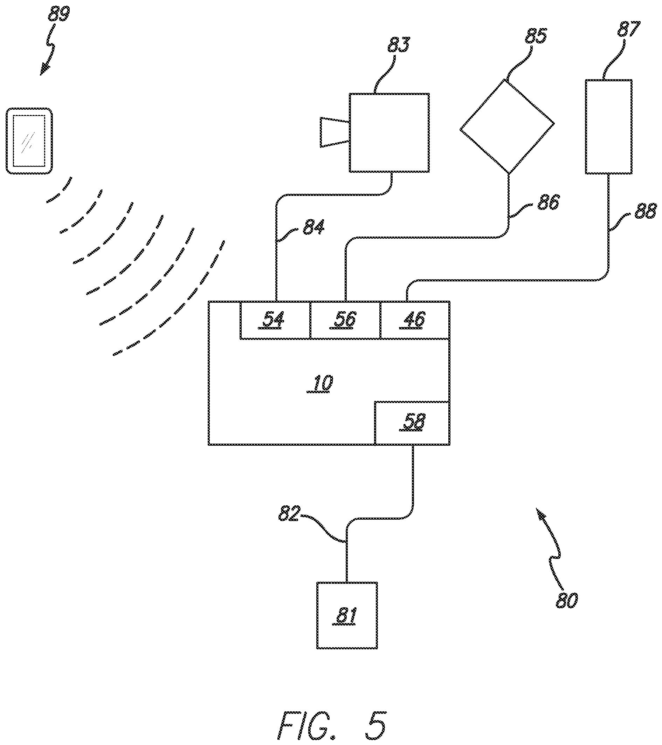

In one aspect, disposed in the housing 21 is a main logic board 32 (FIGS. 1-3) comprising a central processing unit (CPU) and memory. In some embodiments, the CPU includes an Ethernet controller to provide a network interface for remote configuration and control of the controllable media devices via Wi-Fi or a Local Area Network (LAN). In the embodiment shown in FIG. 5, a wireless Ethernet module is included with the CPU to provide direct configuration and control of the controllable media devices using a remote control unit 89.

In still another embodiment, the central processing unit includes an embedded web server to provide a network interface for remote configuration and control of the controllable media devices via the Internet. The user can access the web server either with a user interface 60 on the control device (FIGS. 1-3) or with the remote control device 89.

In one aspect, a dedicated USB charging port 36 (FIGS. 1-3) extends through the front surface 22 of the housing 21 and is operably connected to the main logic board 32. The USB charging port is of especial use for charging mobile devices, such as the mobile devices used for remote control or configuration of the controllable control devices.

In another aspect, the control device 10 is configured to include at least one Ethernet port. In the representative embodiment shown in FIGS. 1-3, the control device includes three rear external Ethernet ports 46, one front external Ethernet port 48 and one internal Ethernet port 50. The external Ethernet ports can be used for remote configuration or control of any controllable media device connected to the Ethernet ports using a suitable protocol including without limitation, industry standard protocols, such as ArtNet, PathportNet, ETCNet, MA-Net, MA-Net2, ACN, ANSI E1.31, ANSI E1.33, SLPv2, ANSI E1.17 and the like. In some embodiments, the Ethernet ports are included as part of an Ethernet switch module, such as a gigabit Ethernet switch module 40 (FIGS. 1-3) disposed in the housing 21 of the signal control device 10 and in communication with the CPU.

Other embodiments of the control device 10 can include different numbers of Ethernet ports in different locations depending on the needs of the user. In some embodiments, the Ethernet switch module 40 includes a pair of status lights 51 positioned adjacent to each of the external Ethernet ports 46 and 48 for indicating whether data is being received or transmitted through the Ethernet ports.

In another aspect, the control device 10 is configured to include one or more additional communication ports for configuration and control of the media devices. In some embodiments, the additional communication ports are included as part of an input/output (I/O) module 52 disposed in the housing 21 of the control device 10 and in communication with the CPU.

In the representative embodiment shown in FIGS. 1-4, the I/O module includes two serial ports 54, and, in this embodiment, two DB-9 serial ports for supporting the RS232 protocol. The RS232 protocol is commonly used for projectors, video processors/switchers, playback devices and the like. Even when a media device does contain Ethernet connectivity, it is often desirable to use the serial port as it may require little or no configuration as opposed to the configuration that Ethernet connectivity often requires.

The representative I/O module 52 also includes an MSTBA communication port 55 for connection to controllable media devices configured and controlled using the RS422 protocol and, in particular, the Sony Decklink extended RS422 protocol. The Sony Decklink extended RS422 protocol is commonly used to trigger playback devices, such as analog and digital VTR decks, media servers and the like.

The representative I/O module 52 includes an XLR-5 inlet port 58 for connection to a DMX-512 controller and an XLR-5 outlet port 56 for connection to at least one controllable media device configured and controlled using the DMX-512 protocol and, in particular, to at least one controllable media devices configured and controlled using the RDM extended DMX-512 protocol. The DMX-512/RDM protocol is commonly used for lighting and show control. Show control provides real-time control over controllers and media devices connected to the other communication ports, i.e., connected to the Ethernet switching ports 46 and 48, the serial ports 54, and the MSTBA connection port 55. Show control enables protocol conversions between any physical port and any Ethernet-based protocol. This provides for, but is not limited to, the direct control of projector functions, video switching and processing, LED walls, playback devices and controlling any device that can be connected using any of the communication ports on the control device. In addition show control provides for the programming of triggers and actions based on events from scheduled dates or times, time-codes contact-closure or any other incoming signal. Additionally, DMX-512/RDM can be used to control other DMX-512 devices based on input coming from the DMX-512 ports.

In another aspect, the control device 10 is configured to provide support for general purpose input/output (GPIO). GPIO supports at least one input and output contact closure interface that enables the control device to directly control power to a device or system or a trigger a system that is able to accept contact closure inputs. The input and output contact closure interfaces provide complex triggering and control over media devices connected to the communication ports by taking a simple external input from switches, such as a musician's foot pedal or a motion sensor or a trigger on a mechanical system. In some embodiments, the control device includes at least one of an MSTBA or other communication port configured to support the GPIO control.

In another aspect, the control device is control device 10 is configured to support a clock generator disposed in the housing 21. The clock generator produces time codes to trigger events or synchronize the various controllable media devices. In some embodiments, the time code is an SMPTE time code.

In some embodiments, the control device 10 is configured to support MIDI Show Control and Midi time code extended protocols for linking control of different media devices. The control device can receive inputs and generate outputs to provide bridging control to and from any of the communication ports.

In still another aspect, disposed on the front surface 24 of the housing 21 of the control device 10 is a user interface 60 (FIGS. 1-3 ) by which a user can operate the control device and control and or configure the controllable media devices, as well as monitor their status. In some aspects, the user interface includes a display 62 (FIGS. 1 and 3), such as a touch screen display, including but not limited to an LCD touch screen display adapted to configure or control the control device as well as at least one of the media devices. In some further aspects, the user interface includes at least one mechanical switch, such as a DIP switch, operably connected to the CPU. In the representative embodiment shown in FIGS. 1-3, a plurality of push buttons 64 (four shown in the representative FIGS. 1-3) are adapted to configure or control the control device as well as at least one of the media devices. In some aspects, the user interface additionally includes a plurality visible indicators 66 (FIGS. 1 and 3) including lights such as LED lights to indicate the status of the various configuration and control features.

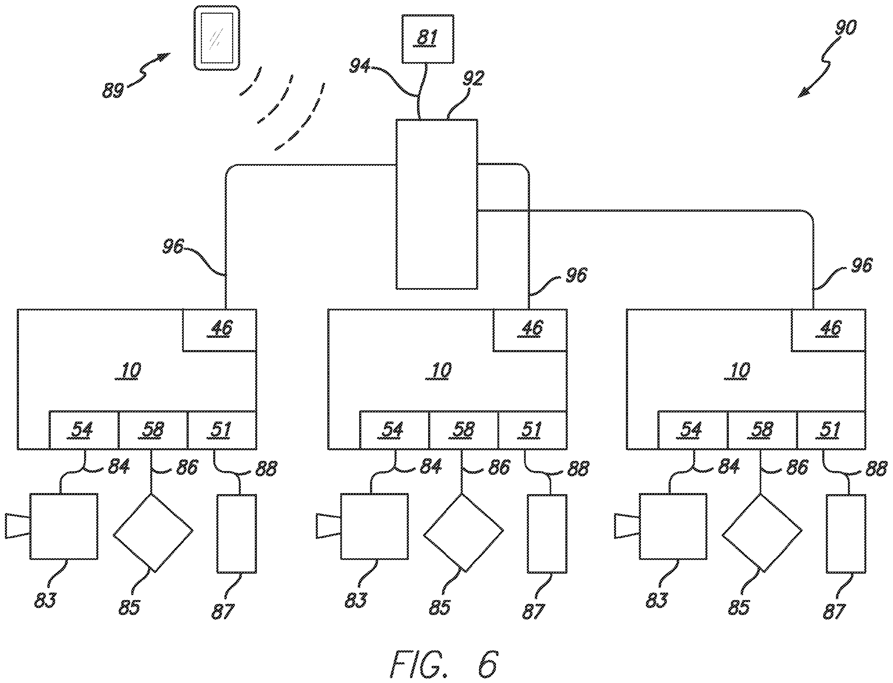

In some aspects, the control device 10 includes a power supply 68 (FIGS. 3 and 4) for supplying power to all of the electrical components of the control device (FIGS. 3, 4 and 6), a power cord receptacle 70 to receive a power cord (not shown) for supplying electricity to the control device and on off control switch 74 (FIGS. 4 and 6) for controlling the flow of electricity to the power supply.

FIG. 5 is a schematic illustration of one aspect or the invention; a media control system 80 comprising a serial network protocol controller 81 configured to transmit an output signal composed of a plurality of channels repeatedly to the control device 10, at least one of the plurality of channels for controlling a parameter of the at least one controllable media device. In the representative embodiment shown in FIG. 5, the serial network protocol controller is operably connected to the DMX-512 input port 58 of the control device using a suitable DMX-512 connection cable 82.

The control device 10, in turn, is operably connected to a plurality of controllable media devices. Representative media devices include, without limitation, lighting devices, such as luminaires and dimmers, projection devices, video processors, audio devices, media servers, effects systems, such as fog machines and the like. For example, in the embodiment shown in Fig. 5, a projector 83 is connected to one of the serial ports 54 using a suitable RS-232 connection cable 84, a lighting device 85 is connected to the DMX-512 outlet port 56 using a suitable DMX-512 connection cable 86 and a media server 87 is connected to one of the external Ethernet ports 46 using an Ethernet cable 88. While a first controllable media device 83, a second controllable media device 85 and a third controllable media device 87 are shown in FIG. 5 one or more controllable media devices can be connected to the control device according to the particular needs of a user.

The remote control unit 89 can be any suitable device. Representative remote control units include smart phones, such an Apple's iPhone.

It is a distinct advantage of the invention that the control unit can be used to configure a wide range of media devices, including DMX-512 protocol controlled media devices, such as lighting devices, including as luminaires and dimmers, projectors, video processors, audio devices, video devices, including video processors/switchers, and playback devices, including analog and digital VTR decks, media servers, effects systems, including fog machines, LED walls and the like.

Additionally, the control unit 10 can be used to configure and control a wide range of parameters. For example, every DMX-512 controllable media device is designed by its manufacturer to include a predefined number of controllable parameters. Representative parameters for a DMX-512 controllable video processing device include, without limitation, contrast, gamma correction, input source selection, horizontal panning, vertical panning, tilt, zoom in and out, beam pattern, image freezing, focus, color and the like. Representative parameters, for a DMX-512 controllable projector will, at least, provide remote control over intensity, zoom, focus and input selection. Additionally, the values within the channels to particular commands for a parameter are fixed within a media device.

In an alternative embodiment shown in FIG. 6, a media device control system 90 comprises a serial network protocol controller 81 operably connected to a single network access point 92 via an Ethernet cable 94. Each of a plurality of control devices 10 is connected to the single network access point to form a local area network. In some embodiments, the control devices are connected by Ethernet cables 96 to the single network access point via the external Ethernet ports 46 on each of the control devices. In other embodiments, the network access point can be connected to the control devices using different types of cables and ports or they can be connected wirelessly. While three control devices and three controllable media devices connected to each of three control devices are shown in the representative embodiment of Fig. 6, one or more controllable media devices can be connected to one or more control devices according to the particular needs of a user. The control device can configure and control each controllable media device independently or in combination, using the remote control unit 89.

In some embodiments, the control device is configured to identify the particular channel or channels that are controllable by a DMX-512 protocol controller. In one embodiment, the central processing unit is configured to identify the particular channel or channels that are controllable by the DMX-512 protocol controller. In another embodiment, the control device includes a separate integrated circuit, processor, logic unit or the like configured to identify the particular channel or channels that are controllable by the DMX-512 protocol controller.

In some embodiments, the control device is configured to include a DMX-512 signal mute. The DMX-512 signal mute selectively enables and disables control of at least one channel while allowing the DMX-512 controller to continue to transmit the at least one channel on to the control device. In some aspects, the control device is configured to selectively disable and/or enable control of the parameter of the at least one channel by the DMX-512 protocol controller while allowing the DMX-512 protocol controller to continue to transmit the at least one channel to the control device.

According to the invention, the control device 10 is configured to selectively disable and/or enable control of the parameter by causing the control device to ignore the at least one channel. According to the invention, the control device is configured with a static default value for each disabled channel, such that if a different value is entered for that channel, the incoming value is ignored and the at least one device continues to use the static value.

In another aspect, the control device 10 includes software or firmware for selectively controlling the mute, the software or firmware implemented through an IOS, Windows, Linux, including Android, or similar operating system user interface.

It is a benefit of control device 10 configured with a mute in accordance with the invention that the selectively disabled parameters can then be controlled by another method, such as manually controlled or controlled by another command protocol. For example, in an exemplary embodiment, the DMX controllable media device is a projector. The DMX-512 protocol controller output signal includes a plurality of channels for controlling parameters such as intensity, input selection, zoom and focus. Using the control device in accordance with this aspect of the invention, the channels for intensity and input selection can be enabled, i.e., be controllable by a DMX-512 protocol controller, while control of the channels for zoom and focus by the media device controller can be disabled, so that the zoom and focus can be manually controlled by the user or by a command protocol.

In another exemplary embodiment of the invention, the serial network protocol controller can be configured to transmit an output signal to a controllable lighting device. The output signal can include, for example, a plurality of channels for controlling parameters, such as intensity, color, focus, beam pattern, zoom, pan and tilt. Using the control device in accordance with this aspect of the invention, the channels for focus, beam pattern, zoom, pan, and tilt can be enabled, to provide for ready control by the controller. Simultaneously, the channels for intensity and color can be disabled to cause the device to ignore any data received for that channel and prevent the user from inadvertently changing the value for the parameter otherwise controllable by that channel. It is a benefit of such a control device that, when enabled, the possibility of inadvertently changing the value of a parameter is minimized or eliminated.

Turning now to the method of operation, in one aspect, a method for controlling at least one parameter of a controllable media device comprises transmitting an output signal composed of a plurality of channels repeatedly to a control device operably connected to the controllable media device, where at least one of the plurality of channels is for controlling a parameter of the controllable media device. Representative parameters include, without limitation, contrast control, gamma correction, input source selection, horizontal panning, vertical panning, tilt control, zoom in and out, control of the beam pattern, image freezing, focus control and color control.

Control of the parameter is selectively disabled using the control device, while continuing to transmit the at least one channel. In one aspect, the output signal composed of the plurality of channels is repeatedly transmitted by a media device controller, such as a serial network protocol controller. Suitable serial network protocol controllers include, without limitation, DMX-512 protocol controllers, ANSI E1.31 protocol controllers, Artnet protocol controllers, PathportNet protocol controllers, ETCNet protocol controllers, MA-Net controllers, MA-Net2 protocol controllers and ACN protocol controllers.

And in an aspect of the invention, the method further comprises selectively enabling control of the disabled at least one parameter of the at least one controllable media device by the at least one channel of the plurality of channels using the control device, while continuing to transmit the at least one channel. In some embodiments, the selective enabling and disabling control of the parameter of the controllable media is by a graphical interface configured to selectively disable and/or enable control of the parameter of the controllable media device by the signal controller.

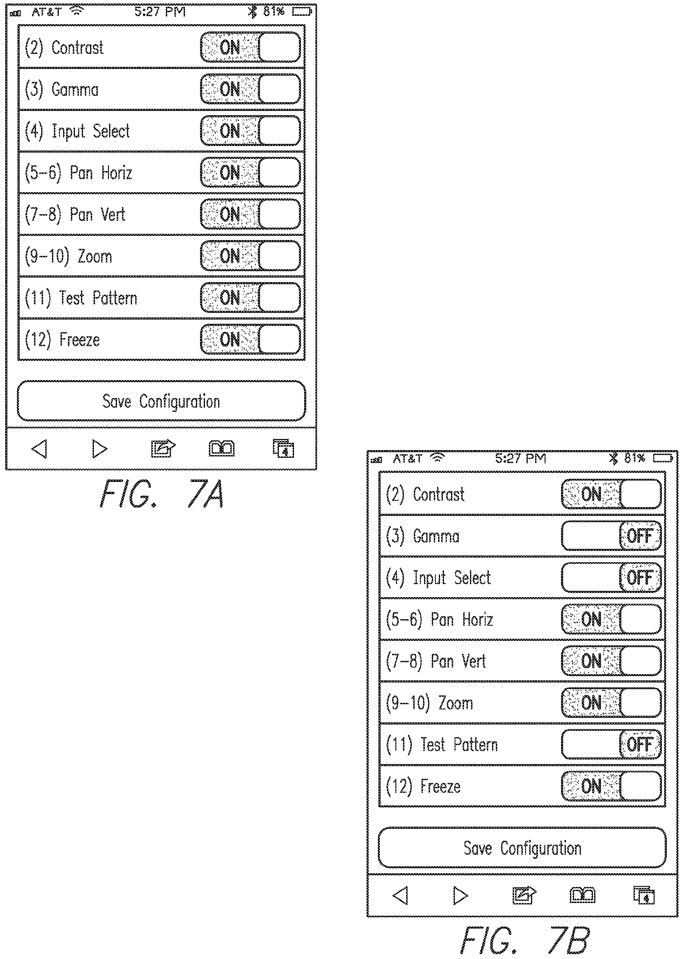

In some aspects, the user can control operation of at least one control device on a channel-by-channel basis using a graphical user interface. Shown in Fig. 7A is a diagrammatic representation of an IOS interface on the remote control having a menu showing channels 2-12 of the media device controller enabled to control, contrast, gamma, input selection, horizontal, respectively. Shown in Fig. 7B is the menu after the appropriate boxes on the user interface have been clicked to disable gamma, input selection, and test pattern.

## Claims

1. A control device (10) comprising:
a housing (21);
at least one printed circuit board disposed in the housing, the at least one printed circuit board including a central processing unit and a memory and the at least one printed circuit board configured to control an output signal received from a state-based protocol controller (81);
a state-based protocol inlet port (58) configured to communicate with the state-based protocol controller,
a state-based protocol outlet port (56) configured to communicate with a state-based protocol controllable media device (85), and
at least one additional communication port configured to communicate with a command-based protocol controllable media device,
wherein the output signal is composed of a plurality of channels repeatedly transmitted, the plurality of channels for controlling a plurality of parameters of at least one of the controllable media devices and the control device is configured to selectively disable control of at least a first parameter of the plurality of parameters of the at least one of the controllable media devices by at least a respective first channel of the plurality of channels while the state-based protocol controller continues to transmit the at least respective first channel to the control device,
wherein the control device is further configured to selectively enable control of a second one of the plurality of parameters of the at least one controllable media devices by a second channel of the plurality of channels while the state-based protocol controller continues to transmit the plurality of channels to the control device,
wherein the control device is configured to selectively disable control of the at least first parameter by causing the control device to ignore the at least respective first channel; the control device being configured with a corresponding static default value for each disabled channel, such that if a different value is received from the state-based protocol controller for that channel, the received value is ignored and the control device is configured to continue to transmit the static default value so that the at least one of the controllable media devices continues to use the static default value for each disabled channel.

2. The control device of claim 1 further comprising a wireless Ethernet controller configured to provide control of the control device via Wi-Fi or via a Local Area Network

3. The control device of claim 1 further comprising an embedded web server configured to provide control of the control device via the Internet.

4. The control device of claim 1 wherein the state-based protocol is DMX-512 protocol and /or the command-based protocol is RS-232 or RS-422.

5. The control device of claim 1 wherein the at least one additional communication port is a serial port or an Ethernet port (46).

6. The control device of claim 1 further comprising more than one Ethernet port.

7. The control device of claim 6 further comprising an Ethernet switch configured to control the more than one Ethernet port.

8. The control device of claim 2 wherein the control device is configured to support at least one of ArtNet, PathportNet, ETCNet, MA-Net, MA-Net2, ACN, ANSI E1.31, ANSI E1.33, SLPv2 and ANSI E1.17 protocols.

9. The control device of claim 1 further configured to provide GPIO control of at least one of the state-based protocol controllable media device and the command-based protocol controllable media device.

10. The control device of claim 1 further comprising a dedicated USB charging port (36) disposed in the housing and/or a clock generator disposed in the housing, and/or an input/output module configured to support at least one of the MIDI Show Control and Midi time code extended protocols.

11. The control device of claim 1 further comprising a user interface device (60) disposed in the housing, the user interface for control of the control device.

12. A media device control system comprising: a state-based protocol controller (81), a control device (10) for the state-based protocol controller according to at least one of the claims 1 to 11 and at least one state-based protocol controllable media device (85).

13. The media device control system of claim 12 wherein the at least one media device is a lighting device, a projection device, a video processor, an audio device, a media server or an effects system device.

## Patentansprüche

1. Steuerungsvorrichtung (10), umfassend:
ein Gehäuse (21);
mindestens eine Leiterplatte, die in dem Gehäuse angeordnet ist, wobei die mindestens eine Leiterplatte eine Zentraleinheit und einen Speicher beinhaltet und die mindestens eine Leiterplatte dazu konfiguriert ist, ein von einer Steuerung (81) mit zustandsbasiertem Protokoll empfangenes Ausgabesignal zu steuern;
einen Eingangsanschluss (58) mit zustandsbasiertem Protokoll, der dazu konfiguriert ist, mit der Steuerung mit zustandsbasiertem Protokoll zu kommunizieren,
einen Ausgangsanschluss (56) mit zustandsbasiertem Protokoll, der dazu konfiguriert ist, mit einer über ein zustandsbasiertes Protokoll steuerbaren Medienvorrichtung (85) zu kommunizieren, und
mindestens einen zusätzlichen Kommunikationsanschluss, der dazu konfiguriert ist, mit einer über ein befehlsbasiertes Protokoll steuerbaren Medienvorrichtung zu kommunizieren,
wobei das Ausgabesignal aus einer wiederholt übertragenen Vielzahl von Kanälen besteht, wobei die Vielzahl von Kanälen zum Steuern einer Vielzahl von Parametern von mindestens einer der steuerbaren Medienvorrichtungen vorgesehen ist und die Steuerungsvorrichtung dazu konfiguriert ist, eine Steuerung von mindestens einem ersten Parameter der Vielzahl von Parametern der mindestens einen der steuerbaren Medienvorrichtungen durch mindestens einen jeweiligen ersten Kanal der Vielzahl von Kanälen selektiv zu deaktivieren, während die Steuerung mit zustandsbasiertem Protokoll weiterhin den mindestens jeweiligen ersten Kanal an die Steuerungsvorrichtung überträgt,
wobei die Steuerungsvorrichtung ferner dazu konfiguriert ist, eine Steuerung eines zweiten der Vielzahl von Parametern der mindestens einen steuerbaren Medienvorrichtung durch einen zweiten Kanal der Vielzahl von Kanälen selektiv zu aktivieren, während die Steuerung mit zustandsbasiertem Protokoll weiterhin die Vielzahl von Kanälen an die Steuerungsvorrichtung überträgt,
wobei die Steuerungsvorrichtung dazu konfiguriert ist, eine Steuerung des mindestens ersten Parameters selektiv zu deaktivieren, indem die Steuerungsvorrichtung dazu veranlasst wird, den mindestens jeweiligen ersten Kanal zu ignorieren; wobei die Steuerungsvorrichtung mit einem entsprechenden statischen Standardwert für jeden deaktivierten Kanal derart konfiguriert ist, dass, wenn ein anderer Wert von der Steuerung mit zustandsbasiertem Protokoll für diesen Kanal empfangen wird, der empfangene Wert ignoriert wird und die Steuerungsvorrichtung dazu konfiguriert ist, weiterhin den statischen Standardwert zu übertragen, sodass die mindestens eine der steuerbaren Medienvorrichtungen weiterhin den statischen Standardwert für jeden deaktivierten Kanal verwendet.

2. Steuerungsvorrichtung nach Anspruch 1, ferner umfassend eine drahtlose Ethernet-Steuerung, die dazu konfiguriert ist, eine Steuerung der Steuerungsvorrichtung über WLAN oder über ein lokales Netzwerk bereitzustellen.

3. Steuerungsvorrichtung nach Anspruch 1, ferner umfassend einen eingebetteten Webserver, der dazu konfiguriert ist, eine Steuerung der Steuerungsvorrichtung über das Internet bereitzustellen.

4. Steuerungsvorrichtung nach Anspruch 1, wobei das zustandsbasierte Protokoll ein DMX-512-Protkoll ist und/oder das befehlsbasierte Protokoll RS-232 oder RS-422 ist.

5. Steuerungsvorrichtung nach Anspruch 1, wobei der mindestens eine zusätzliche Kommunikationsanschluss ein serieller Anschluss oder ein Ethernet-Anschluss (46) ist.

6. Steuerungsvorrichtung nach Anspruch 1, ferner umfassend mehr als einen Ethernet-Anschluss.

7. Steuerungsvorrichtung nach Anspruch 6, ferner umfassend einen Ethernet-Switch, der dazu konfiguriert ist, den mehr als einen Ethernet-Anschluss zu steuern.

8. Steuerungsvorrichtung nach Anspruch 2, wobei die Steuerungsvorrichtung dazu konfiguriert ist, mindestens eines von ArtNet-, PathportNet-, ETCNet-, MA-Net-, MA-Net2-, ACN-, ANSI-E1.31-, ANSI-E1.33-, SLPv2- und ANSI-E1.17-Protokollen zu unterstützen.

9. Steuerungsvorrichtung nach Anspruch 1, die ferner dazu konfiguriert ist, eine GPIO-Steuerung von mindestens einer von der über ein zustandsbasiertes Protokoll steuerbaren Medienvorrichtung und der über ein befehlsbasiertes Protokoll steuerbaren Medienvorrichtung bereitzustellen.

10. Steuerungsvorrichtung nach Anspruch 1, ferner umfassend einen in dem Gehäuse angeordneten dedizierten USB-Ladeanschluss (36) und/oder einen in dem Gehäuse angeordneten Taktgenerator und/oder ein Eingabe/Ausgabe-Modul, das dazu konfiguriert ist, mindestens eines der MIDI-Show-Control- und erweiterten Midi-Time-Code-Protokolle zu unterstützen.

11. Steuerungsvorrichtung nach Anspruch 1, ferner umfassend eine in dem Gehäuse angeordnete Benutzerschnittstellenvorrichtung (60), wobei die Benutzerschnittstelle zur Steuerung der Steuerungsvorrichtung vorgesehen ist.

12. Steuerungssystem für eine Medienvorrichtung, umfassend:
eine Steuerung (81) mit zustandsbasiertem Protokoll, eine Steuerungsvorrichtung (10) für die Steuerung mit zustandsbasiertem Protokoll nach mindestens einem der Ansprüche 1 bis 11 und mindestens eine über ein zustandsbasiertes Protokoll steuerbare Medienvorrichtung (85).

13. Steuerungssystem für eine Medienvorrichtung nach Anspruch 12, wobei es sich bei der mindestens einen Medienvorrichtung um eine Beleuchtungsvorrichtung, eine Projektionsvorrichtung, einen Videoprozessor, eine Audiovorrichtung, einen Medienserver oder eine Effektsystemvorrichtung handelt.

## Revendications

1. Dispositif de contrôle (10) comprenant :
un boîtier (21) ;
au moins une carte de circuit imprimé disposée dans le boîtier, l'au moins une carte de circuit imprimé comportant une unité centrale de traitement et une mémoire et l'au moins une carte de circuit imprimé étant configurée pour contrôler un signal de sortie reçu depuis un contrôleur de protocole d'état (81) ;
un port d'entrée de protocole d'état (58) configuré pour communiquer avec le contrôleur de protocole d'état,
un port de sortie de protocole d'état (56) configuré pour communiquer avec un dispositif multimédia contrôlable par protocole d'état (85), et
au moins un port de communication supplémentaire configuré pour communiquer avec un dispositif multimédia contrôlable par protocole de commande,
dans lequel le signal de sortie est composé d'une pluralité de canaux transmis de façon répétée, la pluralité de canaux servant à contrôler une pluralité de paramètres d'au moins l'un des dispositifs multimédias contrôlables et le dispositif de contrôle est configuré pour désactiver sélectivement un contrôle d'au moins un premier paramètre de la pluralité de paramètres de l'au moins un des dispositifs multimédias contrôlables par au moins un premier canal respectif de la pluralité de canaux tandis que le contrôleur de protocole d'état continue à transmettre l'au moins un premier canal respectif au dispositif de contrôle,
dans lequel le dispositif de contrôle est en outre configuré pour activer sélectivement un contrôle d'un second de la pluralité de paramètres des au moins un dispositif multimédia contrôlable par un second canal de la pluralité de canaux tandis que le contrôleur de protocole d'état continue à transmettre la pluralité de canaux au dispositif de contrôle,
dans lequel le dispositif de contrôle est configuré pour désactiver sélectivement un contrôle de l'au moins un premier paramètre en amenant le dispositif de contrôle à ignorer l'au moins un premier canal respectif ; le dispositif de contrôle étant configuré avec une valeur par défaut statique correspondante pour chaque canal désactivé, de sorte que si une valeur différente est reçue depuis le contrôleur de protocole d'état pour ce canal, la valeur reçue est ignorée et le dispositif de contrôle est configuré pour continuer à transmettre la valeur par défaut statique de sorte que l'au moins un des dispositifs multimédias contrôlables continue à utiliser la valeur par défaut statique pour chaque canal désactivé.

2. Dispositif de contrôle selon la revendication 1 comprenant en outre un contrôleur Ethernet sans fil configuré pour assurer un contrôle du dispositif de contrôle via Wi-Fi ou via un réseau local.

3. Dispositif de contrôle selon la revendication 1 comprenant en outre un serveur Web intégré configuré pour assurer un contrôle du dispositif de contrôle via Internet.

4. Dispositif de contrôle selon la revendication 1 dans lequel le protocole d'état est le protocole DMX-512 et/ou le protocole de commande est RS-232 ou RS-422.

5. Dispositif de contrôle selon la revendication 1 dans lequel l'au moins un port de communication supplémentaire est un port série ou un port Ethernet (46).

6. Dispositif de contrôle selon la revendication 1, comprenant en outre plus d'un port Ethernet.

7. Dispositif de contrôle selon la revendication 6, comprenant en outre un commutateur Ethernet configuré pour contrôler ledit plus d'un port Ethernet.

8. Dispositif de contrôle selon la revendication 2, le dispositif de contrôle étant configuré pour prendre en charge au moins l'un des protocoles ArtNet, PathportNet, ETCNet, MA-Net, MA-Net2, ACN, ANSI E1.31, ANSI E1.33, SLPv2 et ANSI E1.17.

9. Dispositif de contrôle selon la revendication 1, configuré en outre pour assurer un contrôle GPIO d'au moins l'un du dispositif multimédia contrôlable par protocole d'état et du dispositif multimédia contrôlable par protocole de commande.

10. Dispositif de contrôle selon la revendication 1, comprenant en outre un port de charge USB dédié (36) disposé dans le boîtier et/ou un générateur d'horloge disposé dans le boîtier, et/ou un module d'entrée/sortie configuré pour prendre en charge au moins l'un des protocoles étendus MIDI Show Control et de code temporel Midi.

11. Dispositif de contrôle selon la revendication 1, comprenant en outre un dispositif d'interface utilisateur (60) disposé dans le boîtier, l'interface utilisateur servant à contrôler le dispositif de contrôle.

12. Système de contrôle de dispositif multimédia comprenant :
un contrôleur de protocole d'état (81), un dispositif de contrôle (10) pour le contrôleur de protocole d'état selon au moins l'une des revendications 1 à 11 et au moins un dispositif multimédia contrôlable par protocole d'état (85).

13. Système de contrôle de dispositif multimédia selon la revendication 12, dans lequel l'au moins un dispositif multimédia est un dispositif d'éclairage, un dispositif de projection, un processeur vidéo, un dispositif audio, un serveur multimédia ou un dispositif de système d'effets.
